# EUROPEAN PATENT SPECIFICATION

(11) **EP 4 393 801 B1**
(45) Date of publication and mention of the grant of the patent: **03.06.2026**
(21) Application number: 23220570.8
(22) Date of filing: 28.12.2023
(51) Int. Cl.: B62J 43/13, B62J 43/28, B62K 3/00

(54) **ELECTRIC SCOOTER BATTERY COMPRATMENT**
ELEKTRISCHER MOTORROLLER BATTERIEFACH
COMPARTIMENT DE BATTERIE D'UNE TROTTINETTE ÉLECTRIQUE

(30) Priority: 29.12.2022 CN 202223540936 U; 29.12.2022 CN 202223572707 U
(43) Date of publication of application: 03.07.2024
(73) Proprietor: Greenworks (Jiangsu) Co., Ltd, Changzhou, Jiangsu 213023 (CN)
(72) Inventor: HU, Yongshen, Changzhou, 213023 (CN)
(74) Representative: Bergenstråhle & Partners AB

(56) References cited:
- WO-A1-2018/068277
- WO-A1-2021/027961
- DE-A1- 102019 007 915
- DE-A1- 102021 109 289

## Description

### TECHNICAL FIELD

Embodiments of the present invention relate to electric scooters.

### BACKGROUND

Some existing electric scooters often come with a specially designed battery component. The battery component is usually a single piece, which is very large and inconvenient to carry. Moreover, for some existing electric scooters, the battery components of the most existing electric scooters are usually fixed in the frame of the scooter and is not easy to disassemble. Therefore, existing electric scooters are inconvenient when it comes to charging.

DE 102021109289A1 discloses a scooter, in particular folding scooter, comprising two axes each having at least one floor roller and an intermediate roller structure comprising a footboard and a steering column connected to the footboard for a handlebar connected to one of the two axes, with which at least one floor roller can be steered at the lower end, wherein at least one electric drive unit is provided for driving at least one floor roller. In the footboard, a tub-shaped, closed to the floor rollers and, in the state of use of the scooter, the bottom battery compartment is provided for receiving an exchangeable energy storage for supplying the at least one electric drive unit, wherein the battery compartment can be closed by a cover of the footboard at least partially forming cover.

WO 2018/068277A1 discloses an electric scooter comprising a scooter head located on the front and provided with a containing bin; a pedal with one end connected to a bottom part of the scooter head and the other end extending rearwards and used for being pedaled by a foot; and a battery device mounted on the scooter head, wherein the battery device comprises a battery accommodated in the containing bin, a bin door arranged to cover the containing bin, a locking and fixing mechanism for locking and fixing the bin door to an opening of the containing bin so as to enclose the battery in the containing bin, and a plug-in type connector used for transferring electric power of the battery to the scooter, a bottom part of the bin door is provided with a plug slot in communication with the containing bin for inserting the battery, and the plug-in type connector is arranged on a bottom part of the plug slot. By the arrangement of the battery device, the battery is detachable, and the charging process is convenient and rapid, providing a good user experience.

WO 2021027961A1 discloses an electric scooter comprising a bottom frame provided with an accommodation cavity, wherein a side of the accommodation cavity is open, a battery disposed in the accommodation cavity, a cover plate rotatably disposed on the bottom frame, and used to cover the open side of the accommodation cavity, and a locking device disposed between the bottom frame and the cover plate, and used to selectively lock the cover plate.

### SUMMARY

Embodiments of the present invention provide electric scooters. In some exemplary embodiments, since the electric scooter is provided with a compartment body and a compartment cover pivotally mounted to the compartment body, the battery component may be disassembled and replaced more easily. Also, in some exemplary embodiments, since the compartment body or the compartment cover is provided with a jacking component, the problem of poor assembly of the compartment body and the compartment cover caused by deformation due to excessive length of the deck may be effectively avoided.

The present invention provides an electric scooter, which includes: a vehicle body component including a deck and a battery compartment mounted to the deck and wherein the battery compartment includes a compartment body fixedly mounted to the deck and a compartment cover pivotally mounted to the compartment body; a front wheel component directly or indirectly fixedly mounted to one end of the vehicle body component; and a rear wheel component directly or indirectly fixedly mounted to the other end of the vehicle body component. At least one of the compartment body and the compartment cover is provided with a jacking component. When the compartment cover is closed, one end of the jacking component abuts against the compartment body, and the other end of the jacking component abuts against the compartment cover. The jacking component includes a jacking post and a first elastic element cooperating with the jacking post, and when the compartment cover is closed, the jacking post abuts against the compartment body or the compartment cover, while the first elastic element is elastic deformed under the action of the jacking post. One end of the jacking post away from the first elastic element is provided with a boss, and the boss is in a convex arc shape, so that the contact between the boss and the compartment body or the compartment cover is a line contact or a point contact.

**In** some embodiments of the present invention, the compartment body or the compartment cover supported by the jacking post is provided with a positioning groove cooperating with the jacking post.

**In** some embodiments of the present invention, the positioning groove is provided with a guiding portion to guide the jacking post to slide out of the positioning groove.

In some embodiments of the present invention, the compartment cover is provided with a receiving groove, the jacking component is disposed in the receiving groove, and the first elastic element is located between a bottom wall of the receiving groove and the jacking post.

In some embodiments of the present invention, a limiting wall is provided at an opening of the receiving groove, and the limiting wall cooperates with the jacking post, so that the jacking post partially passes through the opening to the outside of the receiving groove.

In some embodiments of the present invention, the receiving groove is provided with an assembly opening, and the jacking component enters the receiving groove through the assembly opening.

In some embodiments of the present invention, the receiving groove is further provided with a limiting plate cooperating with the assembly opening to prevent the jacking component from sliding out of the receiving groove through the assembly opening.

In some embodiments of the present invention, the compartment body is provided with a battery guiding rail.

The electric scooter of the present invention is provided with a compartment body and a compartment cover pivotally mounted to the compartment body, so that the battery component may be more conveniently disassembled and replaced. The compartment body or the compartment cover is equipped with a jacking component, which may effectively avoid the problem of poor assembly of the compartment body and the compartment cover caused by deformation due to the excessively long deck.

### BRIEF DESCRIPTION OF THE DRAWINGS

FIG. 1 is a perspective view of an electric scooter according to exemplary embodiments of the present invention;
FIG. 2 is a perspective view of the electric scooter shown in FIG. 1 with a compartment cover opened;
FIG. 3 is a perspective view of a vehicle body component of the electric scooter shown in FIG. 1;
FIG. 4 is a perspective view of the vehicle body component shown in FIG. 3 from another angle;
FIG. 5 is an exploded view of the vehicle body component shown in FIG. 3;
FIG. 6 is an exploded view of a compartment cover and a jacking component according to exemplary embodiments of the present invention;
FIG. 7 is an enlarged schematic view of part A of FIG. 6;
FIG. 8 is a schematic view of the cooperation between a deck and a jacking component according to exemplary embodiments of the present invention;
FIG. 9 is an enlarged schematic view of part B of FIG. 8;
FIG. 10 is an exploded view of a compartment body, a shaft cover, and a compartment cover according to exemplary embodiments of the present invention;
FIG. 11 is a schematic view of the cooperation between a shaft cover and a compartment cover according to exemplary embodiments of the present invention;
FIG. 12 is a schematic view of the shaft cover and the compartment cover shown in FIG. 11 from another angle;
FIG. 13 is a cross-sectional view of a shaft cover and a compartment cover according to exemplary embodiments of the present invention;
FIG. 14 is a perspective view of a shaft cover according to exemplary embodiments of the present invention; and
FIG. 15 is an enlarged schematic view of part C of FIG. 10.

### DETAILED DESCRIPTION

In order to make the purpose, technical solutions, and advantages of the present invention clearer, the present invention will be described in detail below with reference to the drawings and exemplary embodiments.

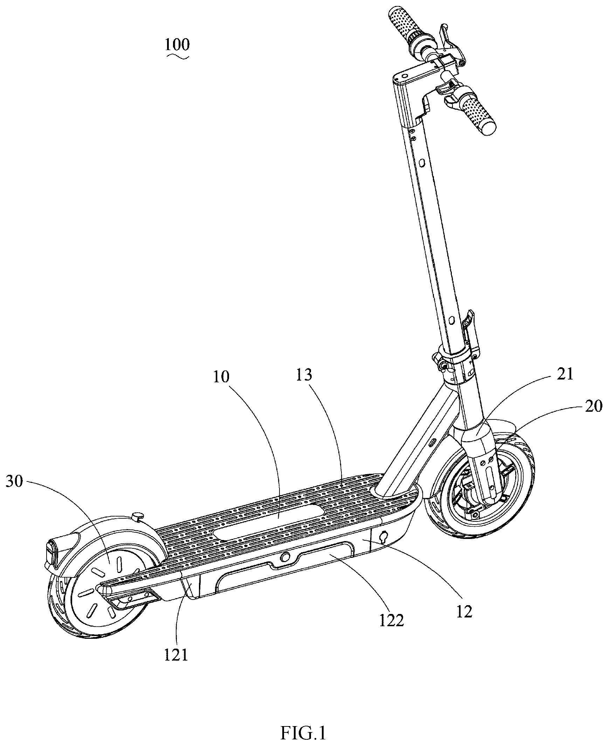

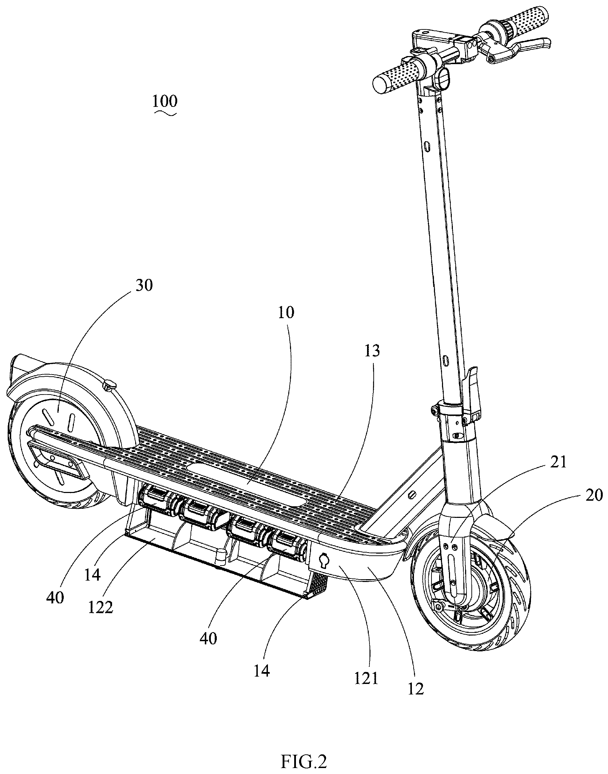

Please refer to FIG. 1 and FIG. 2. Exemplary embodiments of the present invention disclose an electric scooter 100. The electric scooter 100 includes a vehicle body component 10, a front wheel component 20, and a rear wheel component 30. The front wheel component 20 is directly or indirectly fixedly mounted to one end of the vehicle body component 10. The rear wheel component 30 is directly or indirectly fixedly mounted to the other end of the vehicle body component 10. For example, the front wheel component 20 is indirectly fixedly mounted to one end of the vehicle body 10 through a front fork 21, and the rear wheel component 30 is directly mounted to the other end of the vehicle body component 10.

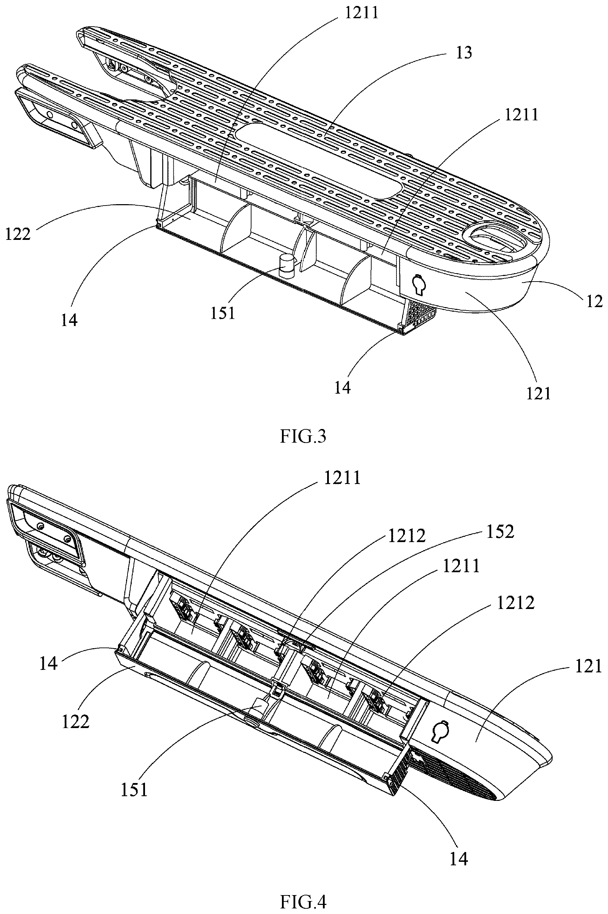

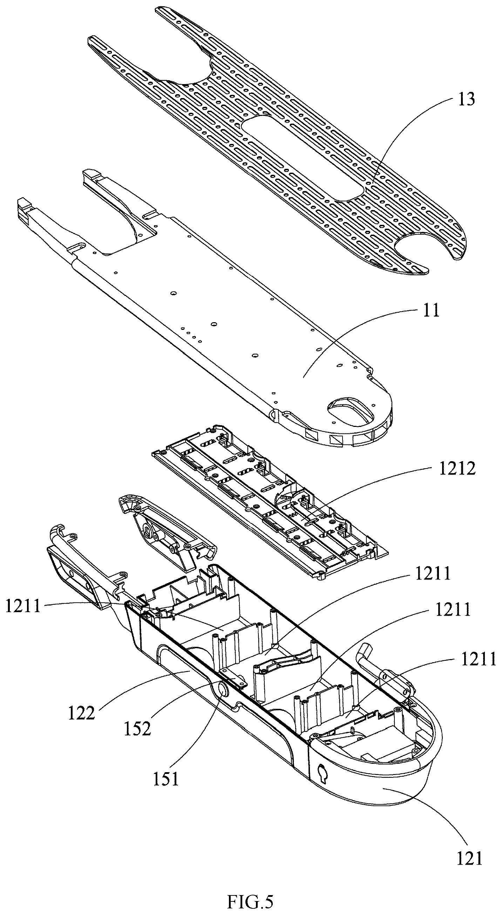

Referring to FIGS. 3, 4, 5, and 10, the vehicle body component 10 includes a deck 11, a battery compartment 12 mounted to the deck 11, and an anti-slip pad 13 mounted to the deck 11. For example, the anti-slip pad 13 is located above the deck 11, and the battery compartment 12 is located below the deck 11. The battery compartment 12 is used to accommodate the battery component 40 and includes a compartment body 121, a shaft cover 123, and a compartment cover 122. The compartment body 121, the shaft cover 123, and the compartment cover 122 are fixedly mounted to the deck 11. The compartment body 121 is provided with at least one battery receiving cavity 1211 to receive a battery component 40. For example, the compartment body 121 includes a plurality of battery receiving cavities 1211.

In exemplary embodiments, the compartment body 121 is also provided with a battery guiding rail 1212 to guide the battery component 40 into the battery receiving cavity 1211. The shaft cover 123 is fixedly mounted to the compartment body 121. The compartment cover 122 is pivotably mounted to the shaft cover 123 and cooperates with the battery receiving cavity 1211 to seal the battery component 40 in the battery receiving cavity 1211. At least one of the compartment body 121 and the compartment cover 122 is provided with a jacking component 14. When the compartment cover 122 is closed, one end of the jacking component 14 abuts against the compartment body 121 and the other end the jacking component 14 abuts against the compartment cover 122.

Compared with the conventional technique, the electric scooter 100 in the present invention is provided with a compartment body 121, a shaft cover 123 fixedly mounted to the compartment body 121, and a compartment cover 122 pivotally mounted to the shaft cover 123. Therefore, the battery component 40 may be disassembled and replaced more conveniently. Moreover, since the jacking component 14 is provided on the compartment body 121 or the compartment cover 122, when the compartment cover 122 is closed, the jacking component 14 can support and abut against a side wall of the compartment body 121, which may effectively avoid problems such as poor assembly of the compartment body 121 and the compartment cover 122 caused by deformation of the deck 11 due to being too long.

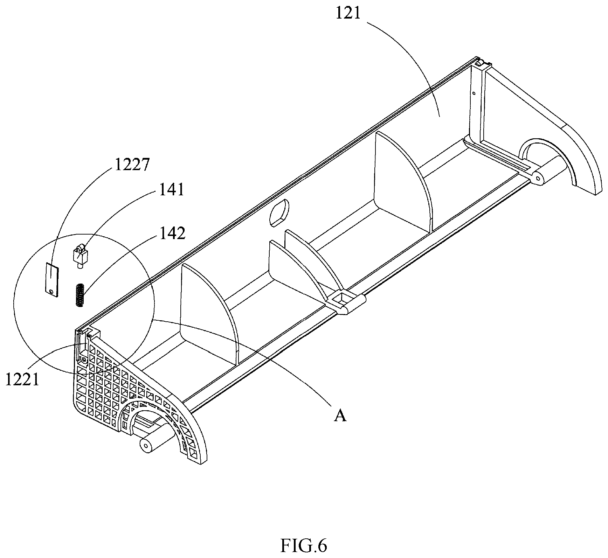

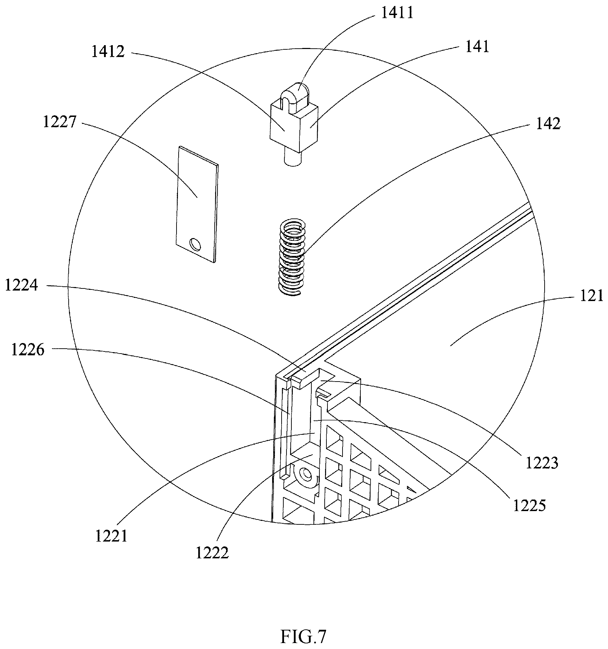

Please refer to FIG. 6 and FIG. 7. The jacking component 14 includes a jacking post 141 and a first elastic element 142 that cooperates with the jacking post 141. When the compartment cover 122 is closed, the jacking post 141 abuts against the compartment body 121 or the compartment cover 122. At this time, one end of the first elastic element 142 that faces away from the jacking post 141 abuts against the compartment cover 122 or the compartment body 121, and the first elastic element 142 deforms under the action of the jacking post 141.

In exemplary embodiments, a boss 1411 is provided at one end of the jacking post 141 that is away from the first elastic element 142. The boss 1411 is in a convex arc shape, so that the contact between the boss 1411 and the compartment body 121 or the compartment cover 122 is a line contact or a point contact, thereby reducing the friction between the jacking post 141 and the compartment body 121 or the compartment covers 122, which makes it easier for the user to open or close the compartment cover 122. Further, the compartment body 121 or the compartment cover 122 that is abutted by the jacking post 141 is provided with a positioning groove 111 that matches the jacking post 141. A guiding portion 1111 is provided in the positioning groove 111 to guide the jacking post 141 to slide out of the positioning groove 111.

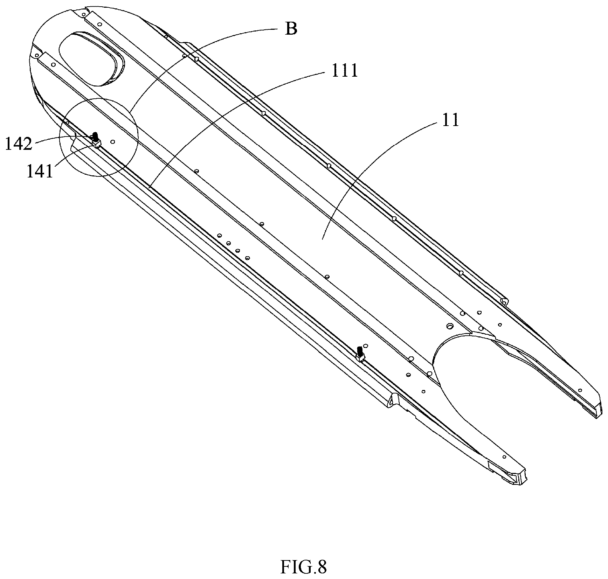

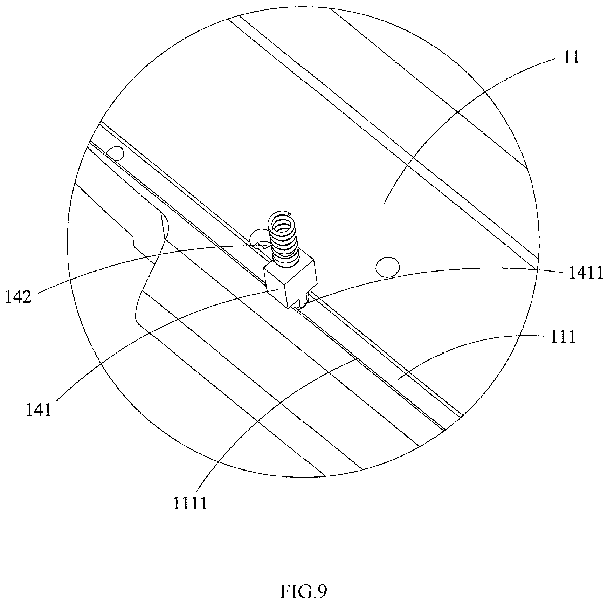

Please refer to FIGS. 7 to 9. In exemplary embodiments, the jacking component 14 is provided on the compartment cover 122, and the positioning groove 111 is provided on the compartment body 121. The compartment cover 122 is also provided with a receiving groove 1221, and the jacking component 14 is disposed in the receiving groove 1221. The first elastic element 142 is located between a bottom wall 1222 of the receiving groove 1221 and the jacking post 141.

Please continue to refer to FIG. 7. A limiting wall 1224 is provided at an opening 1223 of the receiving groove 1221. The jacking post 141 also includes a main body 1412, and the boss 1411 protrudes outward from one end of the main body 1412. In a direction perpendicular to the extending direction of the receiving groove 1221, the width of the main body 1412 is greater than the width of the boss 1411, and the width of the boss 1411 is not greater than the width of the opening 1223. With this configuration, when the first elastic element 142 pops the jacking post 141 out, the limiting wall 1224 cooperates with the main body 1412, so that the main body 1412 is located in the receiving groove 1221 and the boss 1411 can pass through the opening 1223 to the outside of the receiving groove 1221, so as to support and abut against the side wall of the compartment body 121.

In exemplary embodiments, the receiving groove 1221 is provided with an assembly opening 1225, a mounting groove 1226, and a limiting plate 1227. The jacking component 14 enters the receiving groove 1221 through the assembly opening 1225, and the limiting plate 1227 is mounted in the mounting groove 1226, thus sealing the assembly opening 1225 to prevent the jacking component 14 from sliding out of the receiving groove 1221 through the assembly opening 1225.

In exemplary embodiments, the number of the jacking components 14 is two, and these two jacking components 14 are respectively located on two sides of the compartment cover 122. However, it can be understood that in other exemplary embodiments, the number and location of the jacking components 14 can be determined as needed.

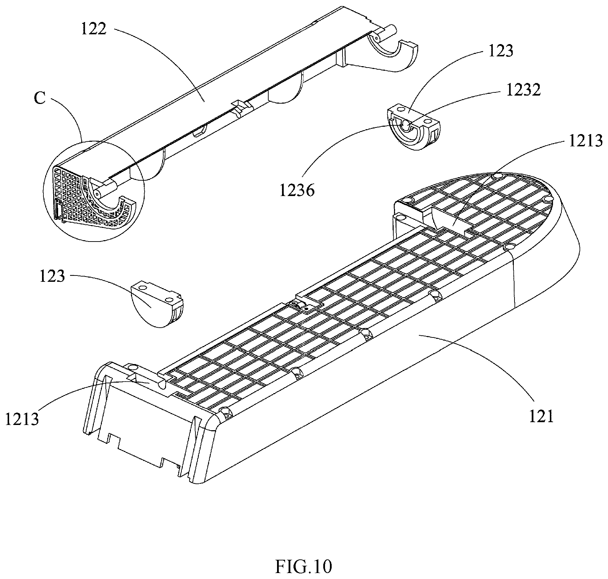

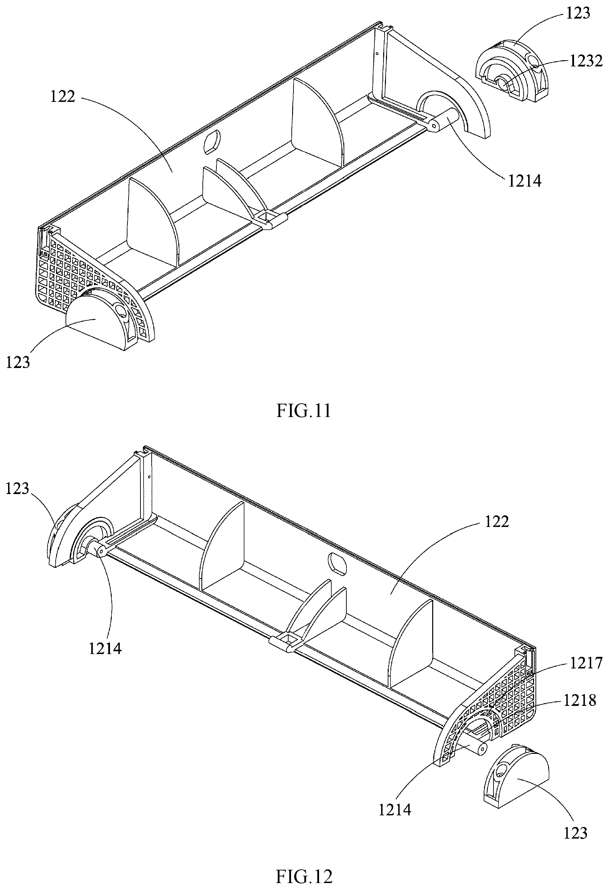

Referring to FIGS. 10 to 12, the compartment body 121 is also provided with a mounting cavity 1213, and the shaft cover 123 is received in the mounting cavity 1213. The shaft cover 123 is provided with a guiding structure, and the compartment cover 122 is provided with a directing structure that matches the guiding structure of the shaft cover 123. With this configuration, the electric scooter 100 according to exemplary embodiments of the present invention may effectively avoid the problem of jamming in the opening and closing of the compartment cover caused by deformation due to excessive length of the deck.

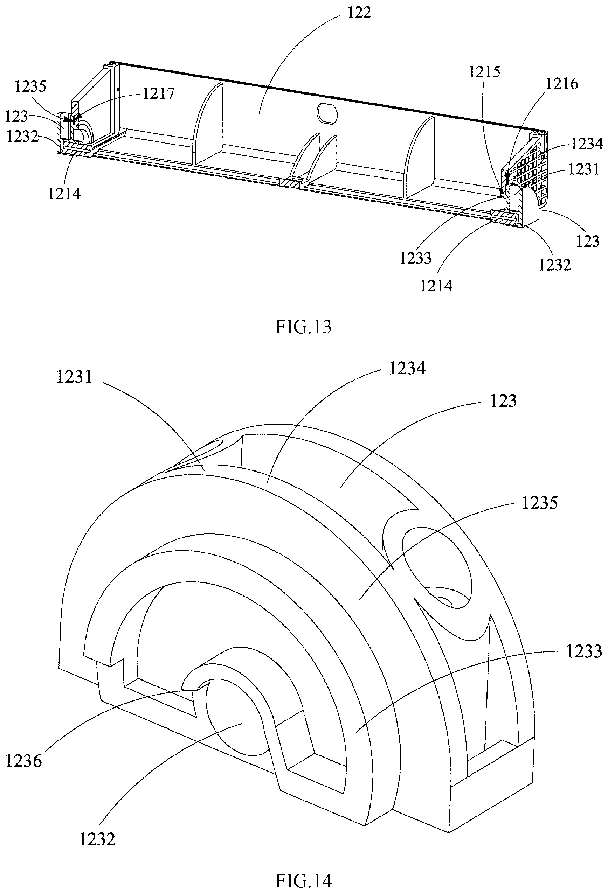

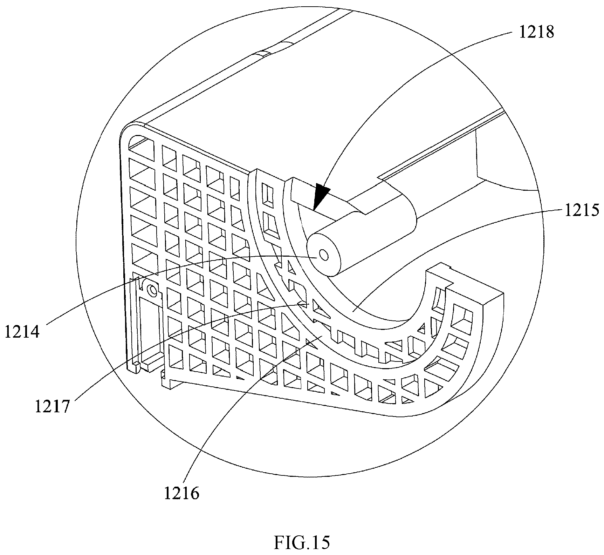

Referring to FIGS. 13 to 15, the shaft cover 123 includes a cover plate 1231, and the cover plate 1231 is provided with a shaft hole 1232 and the guiding structure. The guiding structure includes a first guiding wall 1233 protruding outward from the cover plate 1231, and the compartment cover 122 is provided with a pivot 1214 that cooperates with the shaft hole 1232. The directing structure includes a first directing wall 1215 that cooperates with the first guiding wall 1233. Due to the existence of the first guiding wall 1233 and the first directing wall 1215 cooperating with the first guiding wall 1233, the compartment cover 122 may be better supported. At the same time, the compartment cover 122 can also be guided to rotate around the shaft hole 1232, thereby avoiding the jamming problem when the compartment cover 122 is opened and closed. **In** exemplary embodiments, the first guiding wall 1233 and the first directing wall 1215 are both arc-shaped, and the first guiding wall 1233, the first directing wall 1215, and the shaft hole 1232 are coaxial.

Further, the guiding structure includes a second guiding wall 1234. The directing structure further includes a second directing wall 1216 that cooperates with the second guiding wall 1234. In this way, with the cooperation of the second guiding wall 1234 and the second directing wall 1216, the compartment cover 122 may be better supported. At the same time, the compartment cover 122 can be guided to rotate around the shaft hole 1232, thereby preventing the compartment cover 122 from being stuck when opening and closing. In exemplary embodiments, the second guiding wall 1234 and the second directing wall 1216 are arc-shaped, and the second guiding wall 1234, the second directing wall 1216, and the shaft hole 1232 are coaxial.

A first abutting surface 1235 is also provided between the first guiding wall 1233 and the second guiding wall 1234, and a second abutting surface 1217 is provided between the first directing wall 1215, and the second directing wall 1216. The first abutting surface 1235 cooperates with the second abutting surface 1217. With the cooperation of the first abutting surface 1235 and the second abutting surface 1217, the compartment cover 122 may be better limited between a pair of the shaft covers 123, and the shaking of the compartment cover 122 is effectively avoided, thereby avoiding the problem of poor assembly of the compartment body 121 and the compartment cover 122 that is caused by the shaking of the compartment cover 122.

Please refer to FIG. 14 again, the shaft cover 123 is also provided with a first limiting arm 1236, and the compartment cover 122 is provided with a second limiting arm 1218 that cooperates with the first limiting arm 1236. The first limiting arm 1236 cooperates with the second limiting arm 1218 to limit the rotation range of the compartment cover 122.

In exemplary embodiments, please refer to FIGS. 3, 4 and 5. The battery compartment 12 is also provided with a lock component 15. The lock component 15 includes a duck tongue lock 151 provided on the compartment cover 122 and a locking buckle 152 provided on the compartment body 121. The locking buckle 152 cooperates with the duck tongue lock 151. Through the cooperation of the duck tongue lock 151 and the locking buckle 152, the compartment cover 122 can be locked on the compartment body 121, thereby preventing the battery component 40 from being stolen.

To sum up, the electric scooter 100 according to exemplary embodiments of the present invention is provided with a compartment body 121, a shaft cover 123 fixedly mounted to the compartment body 121, and a compartment cover 122 pivotally mounted to the shaft cover 123. Therefore, it is relatively convenient to disassemble and replace the battery component 40. Also, because the shaft cover 123 is provided with a guiding structure, and the compartment cover 122 is provided with a directing structure that cooperates with the guiding structure, it is possible to effectively avoid the smoothness issue of the opening and closing of the compartment cover 122 caused by deformation due to excessive length of the deck.

The above embodiments are only used to illustrate the technical solutions of the present invention and are not limiting. Although the present invention is described in detail with reference to the exemplary embodiments, those of ordinary skill in the art should understand that modification and equivalent substitutions to the technical solutions of the present invention can be made without departing from the scope of the appended claims.

## Claims

1. An electric scooter (100), comprising:
a vehicle body component (10), including a deck (11) and a battery compartment (12) mounted to the deck (11), wherein the battery compartment (12) includes a compartment body (121) fixedly mounted to the deck (11) and a compartment cover (122) pivotally mounted to the compartment body (121);
a front wheel component (20), directly or indirectly fixedly mounted to a first end of the vehicle body component (10); and
a rear wheel component (30), directly or indirectly fixedly mounted to a second end of the vehicle body component (10),
wherein
at least one of the compartment body (121) and the compartment cover (122) is provided with a jacking component (14), and when the compartment cover (122) is closed, a first end of the jacking component (14) abuts against the compartment body (121), and a second end of the jacking component (14) abuts against the compartment cover (122), and
the jacking component (14) includes a jacking post (141) and a first elastic element (142) cooperating with the jacking post (141), and when the compartment cover (122) is closed, the jacking post (141) abuts against the compartment body (121) or the compartment cover (122), while the first elastic element (142) is elastic deformed under the action of the jacking post (141), **characterized in that**
one end of the jacking post (141) away from the first elastic element (142) is provided with a boss (1411), and the boss (1411) is in a convex arc shape so that the contact between the boss (1411) and the compartment body (121) or the compartment cover (122) is a line contact or a point contact.

2. The electric scooter (100) according to claim 1, wherein the compartment body (121) or the compartment cover (122) supported by the jacking post (141) is provided with a positioning groove (111) cooperating with the jacking post (141).

3. The electric scooter (100) according to claim 2, wherein the positioning groove (111) is provided with a guiding portion (1111) to guide the jacking post (141) to slide out of the positioning groove (111).

4. The electric scooter (100) according to any one of claims 1 to 3, wherein
the compartment cover (122) is provided with a receiving groove (1221),
the jacking component (14) is disposed in the receiving groove (1221), and
the first elastic element (142) is located between a bottom wall of the receiving groove (1221) and the jacking post (141).

5. The electric scooter (100) according to claim 4, wherein
a limiting wall (1224) is provided at an opening (1223) of the receiving groove (1221), and
the limiting wall (1224) cooperates with the jacking post (141), so that the jacking post (141) partially passes through the opening (1223) to the outside of the receiving groove (1221).

6. The electric scooter (100) according to claim 5, wherein
the receiving groove (1221) is provided with an assembly opening (1225), and
the jacking component (14) enters the receiving groove (1221) through the assembly opening (1225).

7. The electric scooter (100) according to claim 6, wherein the receiving groove (1221) is further provided with a limiting plate (1227) cooperating with the assembly opening (1225) to prevent the jacking component (14) from sliding out of the receiving groove (1221) through the assembly opening (1225).

8. The electric scooter (100) according to any one of claims 1 to 7, wherein the compartment body (121) is provided with a battery guiding rail (1212).

## Patentansprüche

1. Elektrischer Motorroller (100), umfassend:
ein Karosseriebauteil (10), einschließend ein Trittbrett (11) und ein an dem Trittbrett (11) montiertes Batteriefach (12), wobei das Batteriefach (12) ein am Trittbrett (11) fest montiertes Fachgehäuse (121) und einen am Fachgehäuse (121) schwenkbar montierten Fachdeckel (122) einschließt;
ein Vorderradbauteil (20), das unmittelbar oder mittelbar fest an einem ersten Ende des Karosseriebauteils (10) montiert ist; und
ein Hinterradbauteil (30), das unmittelbar oder mittelbar fest an einem zweiten Ende des Karosseriebauteils (10) montiert ist,
wobei
mindestens eines von dem Fachgehäuse (121) und dem Fachdeckel (122) mit einem Abstützbauteil (14) versehen ist, und wenn der Fachdeckel (122) geschlossen ist, ein erstes Ende des Abstützbauteils (14) an dem Fachgehäuse (121) anliegt, und ein zweites Ende des Abstützbauteils (14) an dem Fachdeckel (122) anliegt, und
das Abstützbauteil (14) einen Abstützbolzen (141) und ein mit dem Abstützbolzen (141) zusammenwirkendes erstes elastisches Element (142) einschließt, und wenn der Fachdeckel (122) geschlossen ist, der Abstützbolzen (141) an dem Fachgehäuse (121) oder dem Fachdeckel (122) anliegt, während das erste elastische Element (142) unter der Wirkung des Abstützbolzens (141) elastisch verformt wird, **dadurch gekennzeichnet, dass**
ein von dem ersten elastischen Element (142) abgewandtes Ende des Abstützbolzens (141) mit einem Vorsprung (1411) versehen ist, und der Vorsprung (1411) eine konvex bogenförmige Form aufweist, so dass der Kontakt zwischen dem Vorsprung (1411) und dem Fachgehäuse (121) oder dem Fachdeckel (122) ein Linienkontakt oder ein Punktkontakt ist.

2. Elektrischer Motorroller (100) nach Anspruch 1, wobei das bzw. der durch den Abstützbolzen (141) abgestützte Fachgehäuse (121) oder Fachdeckel (122) mit einer mit dem Abstützbolzen (141) zusammenwirkenden Positioniernut **(111)** versehen ist.

3. Elektrischer Motorroller (100) nach Anspruch 2, wobei die Positioniernut (111) mit einem Führungsabschnitt (1111) versehen ist, um den Abstützbolzen (141) zum Herausgleiten aus der Positioniernut (111) zu führen.

4. Elektrischer Motorroller (100) nach einem der Ansprüche 1 bis 3, wobei
der Fachdeckel (122) mit einer Aufnahmenut (1221) versehen ist,
das Abstützbauteil (14) in der Aufnahmenut (1221) angeordnet ist, und
das erste elastische Element (142) zwischen einer Bodenwand der Aufnahmenut (1221) und dem Abstützbolzen (141) angeordnet ist.

5. Elektrischer Motorroller (100) nach Anspruch 4, wobei
eine Begrenzungswand (1224) an einer Öffnung (1223) der Aufnahmenut (1221) vorgesehen ist, und
die Begrenzungswand (1224) mit dem Abstützbolzen (141) zusammenwirkt, so dass der Abstützbolzen (141) teilweise durch die Öffnung (1223) nach außen aus der Aufnahmenut (1221) hindurchragt.

6. Elektrischer Motorroller (100) nach Anspruch 5, wobei
die Aufnahmenut (1221) mit einer Montageöffnung (1225) versehen ist, und
das Abstützbauteil (14) durch die Montageöffnung (1225) in die Aufnahmenut (1221) eintritt.

7. Elektrischer Motorroller (100) nach Anspruch 6, wobei die Aufnahmenut (1221) weiter mit einer mit der Montageöffnung (1225) zusammenwirkenden Begrenzungsplatte (1227) versehen ist, um zu verhindern, dass das Abstützbauteil (14) aus der Aufnahmenut (1221) durch die Montageöffnung (1225) herausgleitet.

8. Elektrischer Motorroller (100) nach einem der Ansprüche 1 bis 7, wobei das Fachgehäuse (121) mit einer Batterieführungsschiene (1212) versehen ist.

## Revendications

1. Trottinette électrique (100), comprenant :
un composant de corps de véhicule (10), incluant un plateau (11) et un compartiment de batterie (12) monté sur le plateau (11), dans laquelle le compartiment de batterie (12) inclut un corps de compartiment (121) monté de manière fixe sur le plateau (11) et un couvercle de compartiment (122) monté de manière pivotante sur le corps de compartiment (121) ;
un composant de roue avant (20), monté de manière fixe, directement ou indirectement, sur une première extrémité du composant de corps de véhicule (10) ; et
un composant de roue arrière (30), monté de manière fixe, directement ou indirectement, sur une seconde extrémité du composant de corps de véhicule (10),
dans laquelle
au moins un élément parmi le corps de compartiment (121) et le couvercle de compartiment (122) est muni d'un composant de calage (14), et lorsque le couvercle de compartiment (122) est fermé, une première extrémité du composant de calage (14) vient en butée contre le corps de compartiment (121), et une seconde extrémité du composant de calage (14) vient en butée contre le couvercle de compartiment (122), et
le composant de calage (14) inclut un pion de calage (141) et un premier élément élastique (142) coopérant avec le pion de calage (141), et lorsque le couvercle de compartiment (122) est fermé, le pion de calage (141) vient en butée contre le corps de compartiment (121) ou le couvercle de compartiment (122), tandis que le premier élément élastique (142) est déformé élastiquement sous l'action du pion de calage (141), **caractérisée en ce que**
une extrémité du pion de calage (141) éloignée du premier élément élastique (142) est munie d'un bossage (1411), et le bossage (1411) est de forme d'arc convexe de sorte que le contact entre le bossage (1411) et le corps de compartiment (121) ou le couvercle de compartiment (122) est un contact linéaire ou un contact ponctuel.

2. Trottinette électrique (100) selon la revendication 1, dans laquelle le corps de compartiment (121) ou le couvercle de compartiment (122) supporté par le pion de calage (141) est muni d'une rainure de positionnement (111) coopérant avec le pion de calage (141).

3. Trottinette électrique (100) selon la revendication 2, dans laquelle la rainure de positionnement (111) est munie d'une partie de guidage (1111) pour guider le pion de calage (141) à coulisser hors de la rainure de positionnement (111).

4. Trottinette électrique (100) selon l'une quelconque des revendications 1 à 3, dans laquelle
le couvercle de compartiment (122) est muni d'une rainure de réception (1221),
le composant de calage (14) est disposé dans la rainure de réception (1221), et
le premier élément élastique (142) est situé entre une paroi de fond de la rainure de réception (1221) et le pion de calage (141).

5. Trottinette électrique (100) selon la revendication 4, dans laquelle
une paroi de limitation (1224) est prévue au niveau d'une ouverture (1223) de la rainure de réception (1221), et
la paroi de limitation (1224) coopère avec le pion de calage (141), de sorte que le pion de calage (141) passe partiellement au travers de l'ouverture (1223) vers l'extérieur de la rainure de réception (1221).

6. Trottinette électrique (100) selon la revendication 5, dans laquelle
la rainure de réception (1221) est munie d'une ouverture de montage (1225), et
le composant de calage (14) entre dans la rainure de réception (1221) à travers l'ouverture de montage (1225).

7. Trottinette électrique (100) selon la revendication 6, dans laquelle la rainure de réception (1221) est en outre munie d'une plaque de limitation (1227) coopérant avec l'ouverture de montage (1225) pour empêcher le composant de calage (14) de coulisser hors de la rainure de réception (1221) à travers l'ouverture de montage (1225).

8. Trottinette électrique (100) selon l'une quelconque des revendications 1 à 7, dans laquelle le corps de compartiment (121) est muni d'un rail de guidage de batterie (1212).
